# EUROPEAN PATENT APPLICATION

(11) **EP 2 332 793 A1**
(43) Date of publication of application: **15.06.2011**
(21) Application number: 10014004.5
(22) Date of filing: 27.10.2010
(51) Int. Cl.: B60S 3/04

(54) **Wheel-washing device**

(30) Priority: 09.12.2009 IT TO20090963
(71) Applicant: Sesia Carlo, 15046 San Salvatore Monferrato (AL) (IT)
(72) Inventor: Sesia Carlo, 15046 San Salvatore Monferrato (AL) (IT)
(74) Representative: Garavelli, Paolo

(57) **Abstract**

A wheel-washing device (1) is described, composed of at least one brush (3) axially rotating around a rotation axis (R), of vertically moving means adapted to alternatively move along a vertical direction (V―V') such rotation axis (R), and of horizontally moving means adapted to alternatively move along a horizontal direction (O―O') such rotation axis (R).

## Description

The present invention refers to a wheel-washing device, in particular or car-washing plants.

As known, in the field of washing cars, tar sediments, anti-freeze salts, braking powder, insects and other fixed residues of dirt are difficult to remove: in particular, it is particularly cumbersome and difficult to wash the wheels due to the adoption of rims or rim covers whose geometries are more and more complex, comprising numerous surfaces accessible with difficulty.

For these reasons, for a long time washing of the wheels has been demanded to manual operations, for example by using high-pressure water lances.

In time, the art has proposed wheel washing devices equipped with one or more rotating brushes responsible for clearing car rims: in general, such devices are integrated in a washing plant, typically with moving portal or tunnel, and interact with suitable detecting systems, such as for example photocells or luminous barriers, that detect the presence of the wheel in its right position with respect to the brush and activate the operation of this latter one and the related preset operating cycle.

Sometimes, in order to obtain a better result, such brushes are characterised by a pulse-type operation for the rotation direction change.

Examples of such wheel washing devices are disclosed in prior patents CN1565903, JP2003063363, DE19951182, JP2000211483, JP4331651, JP4300758, JP4297358, JP1285451, DE3740627, US4308631, GB1082680, EP0911233.

The above wheel washing devices however are not suited to different wheel sizes adopted by the various cars (such as small cars, SUV, off-road cars, etc.) and to not manage to perform a satisfactory washing of the wheel as a whole.

In order to solve the above inconvenience, the art has proposed wheel-washing devices equipped with rotating brushes having a very big diameter, substantially equal to the diameter of the biggest wheel to be washed: it is clear that such solution is scarcely efficient, both from the point of view of costs that the adoption of big-sized brushes requires, above all in case of their replacement, and from the point of views of their constructions, since a brush with big diameter, having a high momentum of inertia, requires suitably sized handling and braking members.

Alternatively, the art proposes wheel-washing devices in which the rotating brush has a central offset intake, in such a way as to eccentrically rotate and wash surfaces that are larger than its own diameter: also in this case, the sizing of handling, braking and support members is fundamental since such eccentric rotation to which the brush is subjected creates high torsion loads that must be able to be supported.

EP-A-0700814, and US-B-7582164 and JP-A-4300758 disclose three vehicle-washing stations with wheel-washing arrangements having alternated and separated, horizontal, slanted or vertical movements.

Therefore, object of the present invention is solving the above prior art problems, by providing a wheel-washing device in which the rotating brush can be alternatively moved along a vertical direction and alternatively along a horizontal direction in such a way as to compose a circular trajectory of the rotation axis of the brush.

Another object of the present invention is providing a wheel-washing device in which the rotating brush can be alternatively moved along a vertical direction and alternatively along a horizontal direction in order to make a substantially circular envelope of the positions assumed by the brush, such envelope having a greater diameter than the diameter of the brush.

Moreover, an object of the present invention is providing a wheel-washing device in which the amount of movements along the vertical direction and the horizontal direction can be suitably adjusted to suit the diameter of the circular envelope of the positions assumed by the brush to the diameter of the wheel to be washed.

Another object of the present invention is providing a wheel-washing device integrated in a car-washing plant in which the movement along the horizontal direction of the rotating brush is provided by the moving portal of such plant.

The above and other objects and advantages of the invention, as will appear from the following description, are obtained with a wheel-washing device, in particular for car-washing plants, as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) could be made to what is described without departing from the scope of the invention as appears from the enclosed claims.

The present invention will be better described by some preferred embodiments thereof, provided as a nonlimiting example, with reference to the enclosed drawings, in which:
- Figure 1 shows a side perspective view of a preferred embodiment of the wheel-washing device according to the present invention;
- Figures 2a and 2b respectively show a front view and a top view of another car-washing plant equipped with the wheel-washing device according to the present invention; and
- Figures 3a and 3b respectively show a front view and a top view of a further car-washing plant equipped with the wheel-washing device according to the present invention.

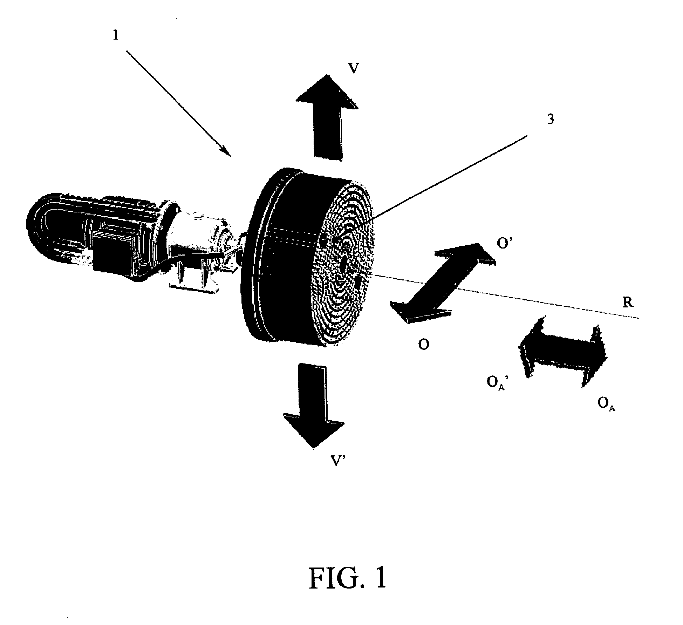

With particular reference to Figure 1, it is possible to note that the wheel-washing device 1 according to the present invention is composed of at least one brush 3 axially rotating around a substantially horizontal rotation axis R and of vertically moving means adapted to alternatively move along a vertical direction (as defined, for example, by arrows V and V' in FIG. 1) such rotation axis R of the brush 3, and of horizontally moving means adapted to alternatively move along a horizontal direction (as defined, for example, by arrows O and O' in FIG. 1) such rotation axis R of the brush 3. In particular, the direction of the alternate vertical movement V―V' and the direction of the alternate horizontal movement O-O' are both orthogonal to the rotation axis R.

Advantageously, the vertically moving means and the horizontally moving means simultaneously act on the rotation axis R in such a way as to compose the alternate vertical movement V-V' and the alternate horizontal movement O―O' to determine a substantially circular envelope of the space positions assumed by the brush 3, such envelope obviously having a greater diameter than the diameter of the brush 3. Therefore, due to the synchronized and combined action of the vertically moving means and the horizontally moving means, the brush 3 not only rotates around the rotation axis R, but the same rotation axis R follows a trajectory, preferably circular, around a second rotation axis determined by the crossing between the direction of the alternate vertical movement V―V' and the direction of the alternate horizontal movement O―O'.

Obviously, the wheel-washing device 1 according to the present invention can comprise suitable adjusting means operating on the horizontally and vertically moving means, adapted to allow manually or automatically setting the amount of movements of the rotation axis R along the direction of the alternate vertical movement V―V' and the direction of the alternate horizontal movement O―O' to suit the diameter of the circular envelope of the positions assumed by the brush 3 to the diameter of the wheel to be washed.

Obviously, the horizontally and vertically moving means can be made according to any known technology suitable for such purpose: they can be made, for example, as suitable pneumatic or oil-pneumatic pistons operating on the rotation axis R of the brush 3, directly or by interposing suitable supporting guides of the brush 3.

Obviously, the wheel-washing device 1 according to the present invention can further comprise a suitable detecting system, for example with photocells or with luminous barrier, suitable to detect the presence of the wheel and its correct centring with respect to the brush 3 and to allow the activation of the horizontally and vertically moving means. To allow an easier approach of the wheel to the brush 3, the wheel-washing device 1 according to the present invention can further comprise second horizontally moving means adapted to move the brush 3 along the direction (as defined, for example, by arrows O_{A} and O_{A}' in FIG. 1) defined by the rotation axis R: such means are adapted to take the brush 3 in contact with the wheel (along direction O_{A}) when the detecting system detects their presence and their correct centring, and to move away the brush 3 (along direction O_{A}') from the wheel once having ended the washing operation, to allow an easier disengagement of the motor vehicle.

The wheel-washing device 1 according to the present invention can also be advantageously integrated in a car-washing plant of the type known in the art. In this case, each one of the two opposite sides of the washing tunnel of such plant is equipped with a related wheel-washing device 1 according to the present invention adapted to wash the car wheels on its pertaining side.

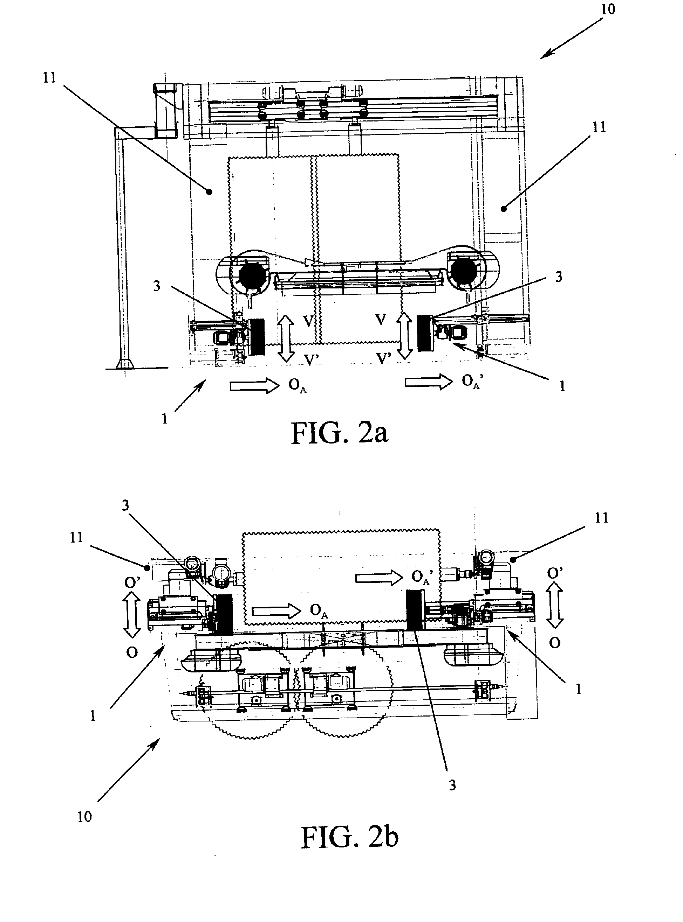

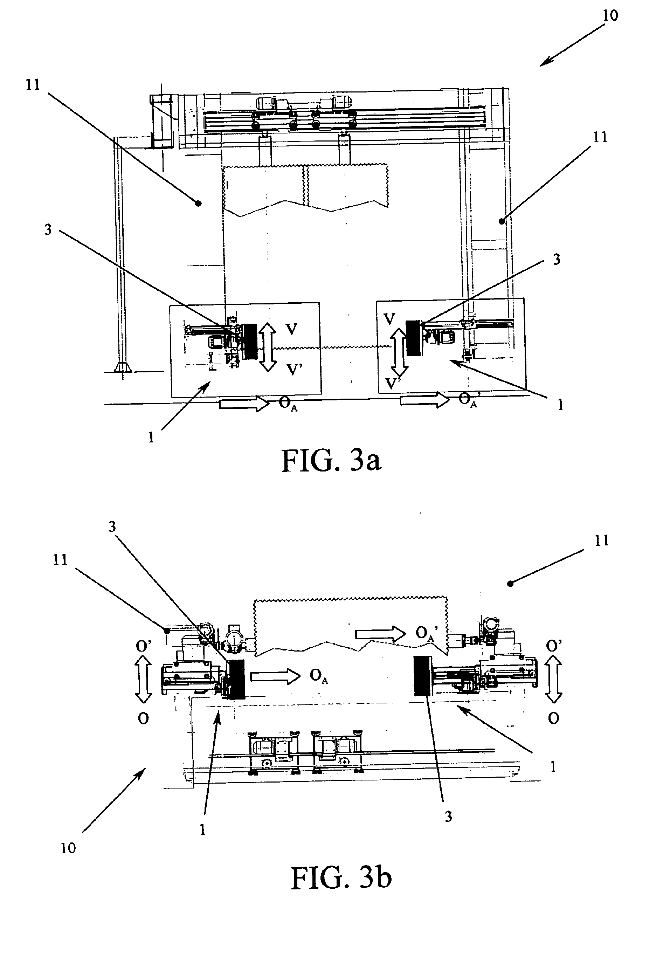

With particular reference to Figures 2a, 2b, 3a, 3b, it is possible to note that, still more advantageously, if the car-washing plant 10 is of the type with moving portal 11, adapted thereby to horizontally slide along suitable guides parallel to the longitudinal axis of the car subjected to washing, the horizontally moving means of the wheel-washing device 1 according to the present invention can be replaced by the same moving portal 11 that, by horizontally moving at suitably reduced speed, in turn moves the rotation axis R of the brush 3 along the direction of the alternate horizontal movement O―O'.

## Claims

1. Wheel-washing device (1) composed of at least one brush (3) axially rotating around a rotation axis (R), **characterised in that** it comprises vertically moving means adapted to alternatively move along a vertical direction (V―V') said rotation axis (R) and of horizontally moving means adapted to alternatively move along a horizontal direction (O―O') said rotation axis (R), said direction of said alternate vertical movement (V―V') and said direction of said alternate horizontal movement (O―O') being orthogonal to said rotation axis (R), and said vertically moving means and said horizontally moving means simultaneously acting on said rotation axis (R) to compose said alternate vertical movement (V―V') and said alternate horizontal movement (O―O') to determine a substantially circular envelope of space positions assumed by said brush (3).

2. Wheel-washing device (1) according to claim 1, **characterised in that** it comprises adjusting means operating on said horizontally and vertically moving means adapted to allow setting an amount of said movements of said rotation axis (R) along said direction of said alternate vertical movement (V-V') and said direction of said alternate horizontal movement (O―O').

3. Wheel-washing device (1) according to claim 1, **characterised in that** it comprises a detecting system adapted to detect the presence of a wheel and its correct centring with respect to said brush (3).

4. Wheel-washing device (1) according to claim 1, **characterised in that** it comprises second horizontally moving means adapted to move said brush (3) along a direction (O_{A―}O_{A}') defined by said rotation axis (R).

5. Wheel-washing device (1) according to claim 1, **characterised in that** said horizontally moving means are a moving portal (11) of a car-washing plant (10).
